# EUROPÄISCHE PATENTSCHRIFT

(11) **EP 3 081 126 B1**
(45) Veröffentlichungstag und Bekanntmachung des Hinweises auf die Patenterteilung: **23.08.2017**
(21) Anmeldenummer: 15001310.0
(22) Anmeldetag: 02.05.2015
(51) Int. Cl.: A47J 42/04

(54) **MAHLWERK FÜR EINE GEWÜRZMÜHLE**
GRINDER FOR A SPICE MILL
BROYEUR POUR UN MOULIN À ÉPICES

(30) Priorität: 16.04.2015 DE 202015002785 U
(43) Veröffentlichungstag der Anmeldung: 19.10.2016
(73) Patentinhaber: TKV Thermoform GmbH, 07381 Pößneck (DE)
(72) Erfinder: Siegert, Werner, 07381 Pößneck (DE)
(74) Vertreter: Kraft, Werner

(56) Entgegenhaltungen:
- EP-A1- 0 986 984
- FR-A- 1 029 497

## Beschreibung

Die Erfindung betrifft das Mahlwerk einer Gewürzmühle zum Zerkleinern von Mahlgut im Sinne von Zerreiben. Sie ist insbesondere für die Bearbeitung von zähem Mahlgut wie beispielsweise Pfeffer geeignet. Darüber hinaus kann auch hartes Mahlgut, beispielsweise Salz, problemlos und abriebfrei zerkleinert werden.

### Stand der Technik

Übliche Gewürzmühlen bestehen aus einem Behälter zur Aufnahme des Mahlgutes, an dem ein Mahlwerk zum Mahlen des Mahlgutes angebracht ist, bzw. das Mahlwerk ist in den Aufnahmebehälter integriert.

Das Mahlwerk selbst ist aus einem Mahlkegel und einem im Wesentlichen korrespondierenden Mahlring gebildet, wodurch sich mit einem Mahlspalt gegenüberstehende oberflächenstrukturierte Mahlflächen realisiert sind.

Der Mahlkegel und/oder der Mahlring sind üblicherweise aus Kunststoff oder Aluminiumguss, bei höherwertigen Mahlwerken aus Keramik, gefertigt. Auf Grund der sich in Mahlrichtung kegelförmig erweiternden Ausbildung der Mahlflächen und deren Oberflächengestaltung gerät das Mahlgut in den Mahlspalt und wird bei Drehbewegung des Mahlkegels durch Druckeinwirkung im sich verjüngenden Mahlspalt gebrochen. Es verlässt die Gewürzmühle mit einem konstruktiv vordefinierten Brechungsgrad. Bei einigen Gewürzmühlen ist dieser durch Verstellen des Mahlkegels veränderbar.

Derartig ausgebildete Mahlwerke sind in der Patentliteratur umfangreich beschrieben, nämlich in der DE000010147964, DE000020214170, DE102005007809, DE102009006917, EP000001459665, EP000001504707, FR1029497 A und der US020050184177. Die Aufzählung stellt eine Auswahl von veröffentlichten technischen Lösungen dar, die der Erfindung mehr oder weniger naheliegen.

Umfangreich im Praxiseinsatz sind Gewürzmühlen in Mehrweg- und Einwegausführung. Bei Ersteren befindet sich das Mahlwerk zwischen einem Mühlenoberteil und einem Mühlenunterteil. Beide Bauteile sind zusammengeklipst. Das Mühlenunterteil ist auf den Mahlgutbehälter, überwiegend aus Glas bestehend, aufgeschraubt. Bei Einweggewürzmühlen sitzt das Mahlwerk direkt auf dem Glasbehälter und ist mittels Prellverschluss unlösbar mit diesem verbunden. Die bei diesen Mühlen eingesetzten Mahlwerke bestehen materialseitig aus Kunststoff oder Keramik. Bei Mühlen mit einem Mahlwerk aus Kunststoff entsteht ein nicht vermeidbarer Abrieb, der bei Einsatz von hartem Mahlgut, wie zum Beispiel Steinsalz, sehr hoch ist. Der Abrieb gelangt zwingend in die Nahrungskette. Um dies zu vermeiden, wurde das erfindungsgemäße Mahlwerk entwickelt. Bei Keramikmahlwerken besteht werkstoffbedingt eine gewisse Bruchgefahr. Deshalb kann auch hier nicht ausgeschlossen werden, dass die verwendeten Werkstoffe in die Nahrungskette gelangen, was lebensmittelrechtlich als äußerst bedenklich einzustufen ist.

Demzufolge gilt die Beseitigung dieser Mängel als erfinderische Zielstellung.

### Aufgabenstellung

Der Erfindung liegt die Aufgabe zu Grunde, ein bruchsicheres und abriebfestes Mahlwerk für eine Gewürzmühle der vorbeschriebenen Art zur Verfügung zu stellen, mit dem sowohl hartes als auch überwiegend zähes Mahlgut zufriedenstellend zerkleinert werden kann. Unter zähem Mahlgut wird solches verstanden, dass widerstandsfähig gegenüber Druckeinwirkung ist.

Solche Eigenschaften besitzen u.a. Pfefferkörner.

### Lösung der Aufgabenstellung

Die Lösung der Aufgabenstellung ist im Patentanspruch 1 angegeben.
Die untergeordneten Ansprüche enthalten zweckmäßige Ausgestaltungen.

Üblicherweise besteht eine gattungsgemäße Gewürzmühle aus einem Mühlenoberteil und einem Mühlenunterteil mit innenliegenden Mahlwerkzeugen.

Das Mühlenoberteil und das Mühlenunterteil sind gegeneinander verdrehbar aber axial fixiert. Das Mühlenunterteil ist auf einen Mahlgutbehälter aufgeschraubt bzw. anderweitig auf diesem montiert.
Auf das Mühlenunterteil kann verzichtet werden, wenn der Mahlgutbehälter dessen Funktion teilweise übernimmt und dazu mit entsprechenden Mitteln ausgestattet ist, beispielsweise zur Begrenzung der Drehbeweglichkeit des Kegelrings, als Bestandteil des nachfolgend beschriebenen Mahlwerks.

Erfindungsgemäß ist das Mahlwerk als Reibwerk ausgelegt und durch zwei blechartige Hauptbauteile gekennzeichnet, nämlich einen Reibkegel und einen Kegelring, die beide vorzugsweise aus Edelstahlblech gefertigt sind. Bereits durch die getroffene Materialwahl sind die beschriebenen Nachteile der vorbeschriebenen Kunststoff- und Keramikmahlwerke im Hinblick auf die Lebensmittelsicherheit beseitigt. Allerdings ist das erfindungsgemäße Mahlwerk insgesamt der blechartigen Grundstruktur von Reibkegel und Kegelring anzupassen.
Der Kegelring liegt mit einer ringförmigen Auflage bzw. mit Auflageabschnitten auf dem Mühlenunterteil auf und ist mit zulässiger Toleranz durch Formschluss radial in diesem fixiert. Der Formschluss ist mittels Fixierlaschen und entsprechenden Anschlägen im Mühlenunterteil bzw. bei Wegfall des Selben direkt am Mahlgutbehälter gewährleistet.
Die erweiterte Seite des Kegelrings zeigt dabei mit glatter Arbeitsoberfläche in Fließrichtung des Mahlgutes, ist also dem Mahlgutbehälter abgewandt. Demzufolge ist die kreisförmige Öffnung am gegenüberliegenden Rand des Kegelrings im Durchmesser verringert. Sie ist an dieser Stelle umfänglich wenigstens einmal eingezogen. Zweckmäßigerweise sind zwei sich gegenüberliegende Einzüge vorhanden. Somit ist gegenüber dem korrespondieren Reibkegel eine Einlaufzone für den Einzug des Mahlgutes in den Reibspalt zwischen Kegelring und Reibkegel geschaffen, der dadurch realisiert ist, dass der Reibkegel mittels Laschen mittelbar auf dem Kegelring drehbar ist. Mittelbar deshalb, weil der Reibkegel im Mühlenoberteil zwischen erhabenen Mitnehmern einliegt und von diesen bewegt wird. Die Breite des Reibspalts ist konstruktiv vordefinierbar.

In Arbeitsstellung fließt das Mahlgut aus dem Mahlgutbehälter durch die kreisförmige Öffnung des Kegelrings hindurch und gerät schließlich im Bereich der Einlaufzone in den Reibspalt zwischen Kegelring und Reibkegel, wo die Zerkleinerung durch Abrieb stattfindet.
Hierbei ist erfindungswesentlich, dass der Reibkegel ein kegelartig verformtes Blech darstellt, dessen Arbeitsfläche durch Reibnoppen in Richtung Kegelring nach Art einer Küchenreibe bzw. eines Reibeisens aufweist. Die Reibnoppen können in Ausrichtung, Höhe und Form regelmäßig oder unregelmäßig angeordnet sein und zum Beispiel durch Stanzen zufällig gebildete oder definierte Durchbrüche mit Schneidkanten aufweisen. Von der Gestaltung und der Anordnung der Reibnoppen wird letztlich der Feinheitsgrad des Mahlgutes bestimmt. Der so gestalteten rauen Arbeitsfläche des Reibkegels steht die glatte Oberfläche des Kegelrings gegenüber. Der Kegelring dient als Widerlager und Druckring für den Reibkegel. Im Bereich der Einzüge erfährt das Mahlgut eine Verdichtung und wird nachfolgend zwischen dem Kegelring und der Reibfläche des Reibkegels mittels der Reibnoppen zerkleinert.
Die bisher übliche Zerkleinerung des Mahlgutes in einer Gewürzmühle durch Brechen des Mahlgutes ist erfindungsgemäß zumindest überwiegend durch Zerreiben des Selben abgelöst.

### Ausführungsbeispiel

Am Beispiel von Gewürzmühlen in Mehrweg- und Einwegausführung wird die Erfindung nachstehend näher erläutert. In den zugehörigen Zeichnungen ist Folgendes dargestellt:
- Figur 1:: Explosionszeichnung einer Mehrweggewürzmühle,
- Figur 2:: zugehöriger Reibkegel 5,
- Figur 3:: zugehöriger Kegelring 6,
- Figur 4:: Explosionszeichnung einer Einweggewürzmühle,
- Figur 5:: zugehöriger Reibkegel 5,
- Figur 6:: zugehöriger Kegelring 6,
- Figur 7:: Kegelring 6 in einer 3D- Ansicht,
- Figur 8:: Kegelring 6 in der Draufsicht,
- Figur 9:: Kegelring 6 in der Seitenansicht,
- Figur 10:: Kegelring 6 in der Seitenansicht, 90° horizontal gedreht gegenüber Figur 9,
- Figur 11:: Reibkegel 5 in der Draufsicht in Fließrichtung A des Mahlgutes,
- Figur 12:: Schnitt B-B durch den Reibkegel 5.

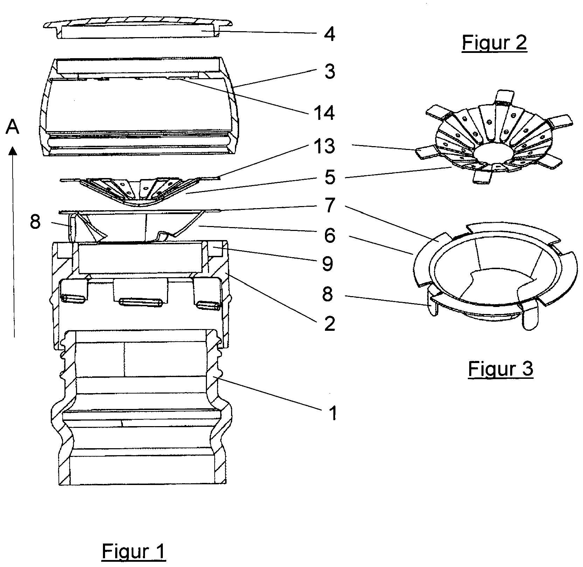

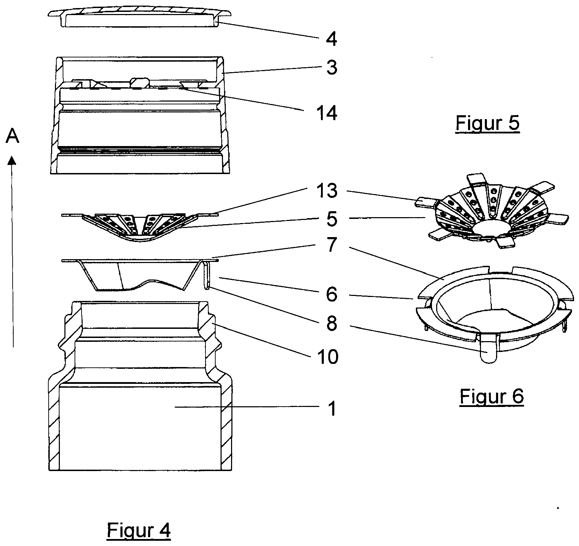

Eine Mehrweggewürzmühle besteht nach den Figuren 1, 2 und 3 aus einem Mahlgutbehälter 1, einem Mühlenunterteil 2 und einem Mühlenoberteil 3 und dem dazwischen angeordneten erfindungsgemäßen Mahlwerk.
Das Mühlenoberteil 3 und das Mühlenunterteil 2 sind zusammengeklipst. In dem Zustand ist das Mühlenoberteil 3 auf dem Mühlenunterteil 2 drehbar.
Zur Komplettierung der Mehrweggewürzmühle ist das Mühlenunterteil 2 auf den Mahlgutbehälter 1 aufgeschraubt und das Mühlenoberteil 3 mit einem Deckel 4 abgeschlossen.
Bei einer Einweggewürzmühle ist auf ein Mühlenunterteil verzichtet worden.
Sie besteht demnach gemäß den Figuren 4, 5 und 6 aus dem Mahlgutbehälter 1, dem Mühlenoberteil 3 mit Deckel 4 und dem dazwischen angeordneten erfindungsgemäßen Mahlwerk. Das Mühlenoberteil 3 ist direkt auf dem Mahlgutbehälter 1 drehbar und mittels Prellverschluss unlösbar mit diesem verbunden.

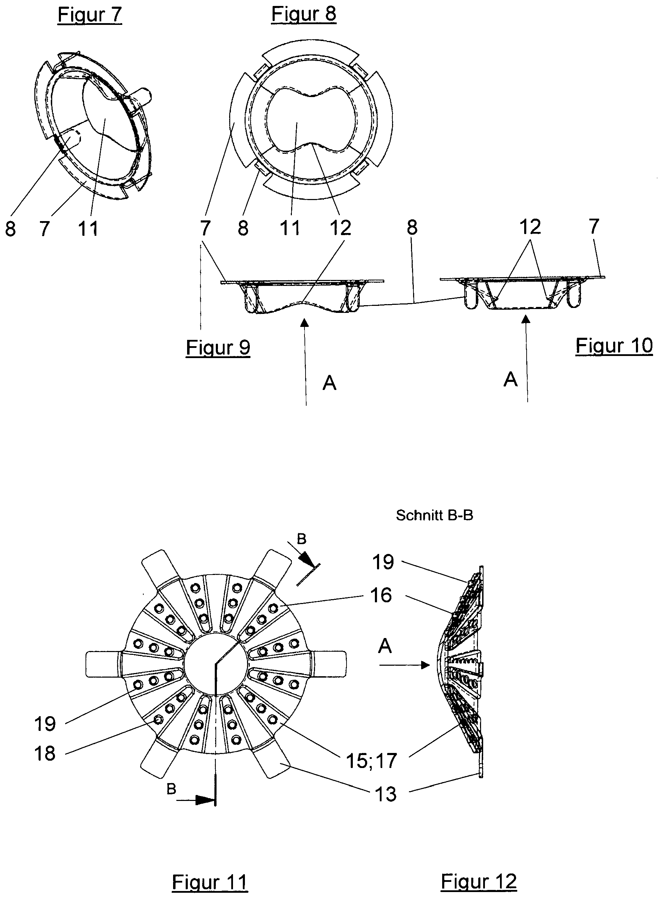

Erfindungsgemäß ist das Mahlwerkzeug als Reibwerk ausgelegt und im Wesentlichen aus einem Reibkegel 5 nach den Figuren 2, 5, 11 und 12 und einem Kegelring 6, dargestellt in den Figuren 3, 6, 7, 8, 9 und 10, zusammengesetzt. Sowohl der Reibkegel 5 als auch der Kegelring 6 ist aus Edelstahlblech gefertigt. Bei einer Mehrweggewürzmühle liegt der Kegelring 6 mit ringförmigen Auflageabschnitten 7 auf dem Mühlenunterteil 2 mit zulässiger radialer Bewegungsmöglichkeit auf. Allerdings ist diese durch Fixierlaschen 8 am Kegelring 6 und entsprechende Anschläge 9 im Mühlenunterteil 2 begrenzt.
Bei einer Einweggewürzmühle liegt der Kegelring 6 mit den besagten Auflageabschnitten 7 auf dem Rand des Mahlgutbehälters 1 auf. Die Begrenzung der Drehbeweglichkeit ist hier ebenfalls durch Fixierlaschen 8 am Kegelring 6, aber mittels Begrenzungsnoppen 10 am Mahlgutbehälters 1 gegeben.

Durch seine Kegelform besitzt der Kegelring 6 eine durchmesserreduzierte Einlauföffnung 11 für das Mahlgut. Im gewählten Beispiel sind in dem Bereich umfänglich zwei sich gegenüberliegende Einzüge 12 vorgesehen.
Dadurch sind gegenüber dem korrespondieren Reibkegel 5 zwei Einlaufzonen zur Verdichtung des Mahlgutes geschaffen. Die Zerkleinerung des Mahlgutes erfolgt überwiegend in den sich anschließenden eigentlichen Arbeitsbereichen jeweils im Reibspalt zwischen Kegelring 6 und Reibkegel 5.
Dazu ist der Reibkegel 5 als kegelartig verformtes Blech ausgebildet, dessen raue Reibfläche 15 der glatten Arbeitsoberfläche des Kegelrings 6 zugewandt ist.
Der Reibkegel 5 liegt mittels Laschen 13 auf dem Kegelring 6 auf und ist auf diesem über die Laschen 13 und erhabene Mitnehmer 14 am Mühlenoberteil 2 durch dieses drehbar.
Die Reibfläche 15 ist mit Reibnoppen 16 nach Art einer Küchenreibe bzw. eines Reibeisens ausgestattet. Je nach gewünschter Beschaffenheit des Reibgutes variieren die Reibnoppen 16 in Anordnung, Ausrichtung, Höhe und Form.
Im gewählten Beispiel wurde eine strukturierte Reibfläche 15 gewählt.
Die Reibnoppen 16 sind hier sternförmig in gegenüber der übrigen Oberfläche des Reibkegels 5 abgesenkten Bereichen 17 angeordnet. Sie weisen durch Stanzen zufällig gebildete Durchbrüche 18 mit unregelmäßig ausgebildeten Schneidkanten 19 auf.

### Bezugszeichenliste

- A: Fließrichtung des Mahlgutes,
- B-B: Schnitt durch den Reibkegel 5,
- 1: Mahlgutbehälter,
- 2: Mühlenunterteil,
- 3: Mühlenoberteil,
- 4: Deckel,
- 5: Reibkegel,
- 6: Kegelring,
- 7: Auflageabschnitt,
- 8: Fixierlasche,
- 9: Anschlag,
- 10: Begrenzungsnoppe,
- 11: Einlauföffnung,
- 12: Einzug,
- 13: Lasche,
- 14: Mitnehmer,
- 15: Reibfläche,
- 16: Reibnoppe,
- 17: abgesenkter Bereich,
- 18: Durchbruch,
- 19: Schneidkante.

## Patentansprüche

1. Mahlwerk für eine Gewürzmühle, die im Wesentlichen aus einem Mahlgutbehälter, einem Mühlenunterteil und einem Mühlenoberteil mit innenliegenden mittelbar gegeneinander verdrehbaren, aber axial fixierten Mahlwerkzeugen zusammengesetzt ist, bzw. alternativ aus einem Mahlgutbehälter und einem Mühlenoberteil mit dazwischen angeordneten mittelbar gegeneinander verdrehbaren, aber axial fixierten Mahlwerkzeugen, besteht,
**dadurch gekennzeichnet,**
**dass** das Mahlwerk als Reibwerk mit einem aus Edelstahlblech gefertigten Reibkegel (5) und einem ebenfalls aus Edelstahlblech bestehenden Kegelring (6) ausgebildet ist, wobei der Reibkegel (5) auf dem Kegelring (6) drehbar ist und die Reibfläche (15) des Reibkegels (5) der glatten Arbeitsoberfläche des Kegelrings (6) zugewandt ist,
**dass** der Kegelring (6) eine durchmesserreduzierte Einlauföffnung (11) für das Mahlgut aufweist,
**dass** im Bereich der Einlauföffnung (11) umfänglich wenigstens ein Einzug (12) zur Bildung einer Einlaufzone zwischen dem Kegelring (6) und dem korrespondieren Reibkegel (5) vorhanden ist
**und dass** der Reibkegel (5) ein kegelartig verformtes mit Reibnoppen (16) nach Art einer Küchenreibe bzw. eines Reibeisens versehenes Blech darstellt,
dessen Reibnoppen (16) in vordefinierter Anordnung, Ausrichtung, Höhe und Form die Reibfläche (15) bilden.

2. Mahlwerk nach Anspruch 1, **dadurch gekennzeichnet,**
**dass** der Kegelring (6) mit ringförmigen Auflageabschnitten (7) auf dem Mühlenunterteil (2) drehbeweglich aufliegt und die Drehbeweglichkeit mittels Fixierlaschen (8) am Kegelring (6) und Anschlägen (9) im Mühlenunterteil (2) begrenzt ist.

3. Mahlwerk nach Anspruch 1, **dadurch gekennzeichnet,**
**dass** der Kegelring (6) bei einer Gewürzmühle ohne Mühlenunterteil (2) mit ringförmigen Auflageabschnitten (7) auf dem Rand des Mahlgutbehälters (1) drehbeweglich aufliegt und die Drehbeweglichkeit mittels Fixierlaschen (8) am Kegelring (6) und Begrenzungsnoppen (10) am Mahlgutbehälters (1) begrenzt ist.

4. Mahlwerk nach Anspruch 1, **dadurch gekennzeichnet,**
**dass** der Kegelring (6) im Umfangsbereich der durchmesserreduzierten Einlauföffnung (11) zwei um 180° versetzte Einzüge (12) aufweist, wodurch zwei Einlaufzonen für den Einzug des Mahlgutes in den Reibspalt zwischen Kegelring (6) und Reibkegel (5) geschaffen sind.

5. Mahlwerk nach Anspruch 1, **dadurch gekennzeichnet,**
**dass** sich in Drehrichtung an jeden Einzug (12) ein Arbeitsbereich anschließt, dem wiederum ein Einzug (12) folgt.

6. Mahlwerk nach Anspruch 1, **dadurch gekennzeichnet,**
**dass** der Reibkegel (5) mittels Laschen (13) auf dem Kegelring (6) drehbeweglich aufliegt und über die Laschen (13) und erhabene Mitnehmer (14) am Mühlenoberteil (2) von diesem drehbar ist.

7. Mahlwerk nach Anspruch 1, **dadurch gekennzeichnet,**
**dass** die Reibfläche (15) des Reibkegel (5) strukturiert ist, indem die Reibnoppen (16) sternförmig in gegenüber der übrigen Oberfläche des Reibkegels (5) abgesenkten Bereichen (17) angeordnet sind.

8. Mahlwerk nach Anspruch 1, **dadurch gekennzeichnet,**
**dass** die Reibnoppen (16) zufällig gebildete und/oder definierte Durchbrüche (18) mit Schneidkanten (19) aufweisen.

9. Mahlwerk nach Anspruch 1, **dadurch gekennzeichnet,**
**dass** der Reibkegel (5) und der Kegelring (6) aus einem Edelstahl mindestens gleichwertigem Material gefertigt sind.

## Claims

1. Grinder for a spice mill, which predominantly consists of a container for the material to be ground, a mill lower part and a mill upper part comprising internal grinding tools, which can be rotated indirectly against one another, but which are axially fixed. Alternatively, it may consist of a container for the material to be ground and a mill upper part with grinding tools, which can be rotated indirectly against one another, but which are axially fixed, arranged between the two parts. **The grinder is characterised by the following features:**
The grinder is designed as a grater with a grating cone (5) manufactured from stainless steel sheet and a tapered ring (6) that is also made of stainless steel sheet, wherein the grating cone (5) is rotatable on the tapered ring (6) and the grating surface (15) of the grating cone (5) faces the smooth working surface of the tapered ring (6),
The tapered ring (6) has an inlet opening (11) that is reduced in diameter for the grinding material,
In the region of the inlet opening (11), at least one entry (12) is circumferentially present for forming an inlet zone between the tapered ring (6) and the corresponding grating cone (5),
and the grating cone (5) represents a cone-shaped sheet provided with grating nubs (16) according to the type of kitchen grater or a plate provided with a grater, the grating nubs (16) of which form the grating surface (15) in a predefined arrangement, direction, height and shape.

2. The grinder according to claim 1 **is characterised by the following feature:**
The tapered ring (6) with circular support sections (7) is positioned on the mill lower part (2) so that it can rotate and the rotation is limited by a fixing bar (8) on the tapered ring (6) and stops (9) in the mill lower part (2).

3. The grinder according to claim 1 **is characterised by the following feature:**
The tapered ring (6) for a spice mill without a mill lower part (2) with circular support sections (7) is positioned on the edge of the container for the material to be ground (1) so that it can rotate and the rotation is limited by a fixing bar (8) on the tapered ring (6) and limiting nubs (10) on the container for the material to be ground (1).

4. The grinder according to claim 1 **is characterised by the following feature:**
The tapered ring (6) in the circumferential area of the inlet opening (11) that is reduced in diameter has two entries (12) offset by 180°, which creates two inlet zones for the intake of the material to be ground into the grating gap between the tapered ring (6) and the grating cone (5).

5. The grinder according to claim 1 **is characterised by the following feature:**
A working surface is connected to every entry (12) in the direction of rotation, which is, in turn, followed by an entry (12).

6. The grinder according to claim 1 **is characterised by the following feature:**
The grating cone (5) is positioned on the tapered ring (6) using lugs (13) so that it can rotate and so that it can be rotated by this via the lugs (13) and raised driver (14) on the mill upper part (2).

7. The grinder according to claim 1 **is characterised by the following feature:**
The grating surface (15) of the grating cone (5) is structured so that the grating nubs (16) are arranged in a star shape in the areas (17) lowered compared to the rest of the grating cone (5) surface.

8. The grinder according to claim 1 **is characterised by the following feature:**
The grating nubs (16) have randomly formed and/or defined openings (18) with cutting edges (19).

9. The grinder according to claim 1 **is characterised by the following feature:**
The grating cone (5) and the tapered ring (6) are manufactured from a material at least equivalent to stainless steel.

## Revendications

1. Broyeur pour moulin à épices composé essentiellement d'un réservoir de mouture, d'une partie inférieure, et d'une partie supérieure avec des outils de broyage internes rotatifs les uns par rapport aux autres et fixés axialement, ou en alternative d'un réservoir de mouture et d'une partie supérieure avec, entre les deux, des outils de broyage internes rotatifs les uns par rapport aux autres et fixés axialement,
**caractérisé par le fait que**
Le broyeur est formé d'un cône-râpe (5) en tôle d'acier inoxydable et d'un anneau conique (6) également en acier inoxydable, le cône (5) pouvant tourner sur l'anneau (6), et la surface de friction (15) du cône (5) étant orientée vers la surface de travail lisse de l'anneau (6),
L'anneau (6) présente une ouverture d'entrée de diamètre réduit (11) pour le produit broyé,
Au niveau de l'ouverture d'entrée (11), sur le pourtour se trouve au moins une entrée (12) pour former une zone d'introduction entre l'anneau conique (6) et le cône-râpe correspondant (5),
Le cône-râpe (5) est formé d'une tôle conique munie de picots de râpe (16) comme sur une râpe de cuisine ; les picots (16) forment la surface de friction (15) dans un ordre, un sens, une hauteur et une forme prédéfinies.

2. Broyeur selon la revendication 1 **caractérisé par le fait que** l'anneau conique (6) repose sur la partie inférieure du broyeur (2) par des portions d'appui (7) permettant sa rotation, cette dernière étant limitée par des pattes de fixation (8) sur l'anneau conique (6) et des butées (9) sur la partie inférieure du broyeur (2).

3. Broyeur selon la revendication 1 **caractérisé par le fait que** l'anneau conique (6) du moulin à épices sans partie inférieure (2) repose sur le bord du réservoir de mouture (1) sur des supports d'appui circulaires (7) permettant sa rotation, cette dernière étant limitée par des pattes de fixation (8) sur l'anneau conique (6) et des picots d'arrêt (10) sur le réservoir de mouture (1).

4. Broyeur selon la revendication 1 **caractérisé par le fait que** l'anneau conique (6) présente sur la circonférence de l'ouverture d'entrée (11) deux entrées (12) décalées de 180° créant deux zones d'introduction du produit à broyer dans la fente entre l'anneau conique (6) et le cône-râpe (5).

5. Broyeur selon la revendication 1 **caractérisé par le fait que** dans le sens de rotation une zone de travail est reliée à chaque entrée (12) suivant à son tour une entrée (12).

6. Broyeur selon la revendication 1 **caractérisé par le fait que** le cône-râpe (5) repose de façon sur l'anneau conique (6) à l'aide d'attaches (13) permettant sa rotation, les attaches (13) et l'entraîneur (14) pouvant pivoter sur la partie supérieure du broyeur (2).

7. Broyeur selon la revendication 1 **caractérisé par le fait que** la surface de râpe (15) du cône (5) est structurée avec les picots (16) disposés en forme d'étoile dans les zones abaissées (17) par rapport au reste de la surface du cône (5)

8. Broyeur selon la revendication 1 **caractérisé par le fait que** les picots (16) présentent des percées aléatoires et/ou définies (18) avec des bords de coupe (19)

9. Broyeur selon la revendication 1 **caractérisé par le fait que** le cône (5) et l'anneau conique (6) sont fabriqués dans de l'acier inoxydable au moins de même valeur.
